# EUROPEAN PATENT APPLICATION

(11) **EP 2 196 328 A1**
(43) Date of publication of application: **16.06.2010**
(21) Application number: 08790498.3
(22) Date of filing: 25.08.2008
(51) Int. Cl.: B60C 5/00, B60C 9/00

(54) **TIRE PAIR FOR TWO-WHEELED MOTOR VEHICLE**

(30) Priority: 27.08.2007 JP 2007219175
(71) Applicant: Sumitomo Rubber Industries, Ltd., Kobe-shi, Hyogo 651-0072 (JP)
(72) Inventor: IGARASHI, Yasuo, Hyogo 651-0072 (JP); TAMANO, Akiyoshi, Hyogo 651-0072 (JP)
(74) Representative: Manitz, Finsterwald & Partner GbR
(86) International application number: PCT/JP2008/002294
(87) International publication number: WO 2009/028165

(57) **Abstract**

A tire pair 2 for a motorcycle includes a front tire 6 and a rear tire 8. A difference (F15 - R15) between a camber thrust index F15 of the front tire 6 and a camber thrust index R15 of the rear tire 8 at a camber angle of 15° is equal to or greater than -0.038 and is equal to or smaller than 0.038. A difference (F30 - R30) between a camber thrust index F30 of the front tire 6 and a camber thrust index R30 of the rear tire 8 at a camber angle of 30° is equal to or greater than 0.038 and is equal to or smaller than 0.114. The camber thrust index F30 at the camber angle of 30° is equal to or greater than 0.570. A difference (F45 - R45) between a camber thrust index F45 of the front tire 6 and a camber thrust index R45 of the rear tire 8 at a camber angle of 45° is equal to or greater than 0.076 and is equal to or smaller than 0.228.

## Description

### TECHNICAL FIELD

The present invention relates to a tire pair which is formed by a front tire and a rear tire and is to be attached to a motorcycle.

### BACKGROUND ART

A motorcycle includes a front tire and a rear tire. A role of the front tire is greatly different from that of the rear tire. A tire pair taking the difference in the role into consideration has been disclosed in Japanese Laid-Open Patent Publication No. 6-270613 and Japanese Laid-Open Patent Publication No. 8-216629.

In cornering, a centrifugal force acts on the motorcycle. A centripetal force which is balanced with the centrifugal force is required for the cornering. In the motorcycle, the cornering is achieved by a camber thrust generated by an inward tilt and a cornering force generated by a friction between a tread and a road surface.

In the tire for the motorcycle, a steering responsiveness is important. A motorcycle using a front tire having a great cornering force is excellent in the steering responsiveness. In the tire for the motorcycle, a suppression in fall-down is also important. The fall-down is a phenomenon in which a roll displacement is excessively quicker than a yaw displacement during the cornering. The fall-down makes a rider anxious. In a motorcycle using a front tire having a great camber torque, the fall-down can be suppressed.
Document 1 : Japanese Laid-Open Patent Publication No. 6-270613
Document 2 : Japanese Laid-Open Patent Publication No. 8-216629

### DISCLOSURE OF THE INVENTION

### PROBLEMS TO BE SOLVED

A front tire having a great cornering force is sensitive to a disturbance. A motorcycle including the tire has a poor stability. In respect of the stability, the cornering force is to be suppressed. An improvement in a steering responsiveness due to the cornering force is limited.

In a motorcycle using a front tire having a great camber torque, an involution of a steering wheel is apt to be caused in cornering. In respect of a suppression in the involution, it is necessary to control the camber torque. An improvement in fall-down due to the camber torque is limited.

In recent years, a motorcycle has a high performance and can carry out high speed running. In a tire for the motorcycle, an enhancement in the performance during cornering has been desired. It is an object of the present invention to provide a tire pair for a motorcycle which is excellent in a steering responsiveness and a cornering stability and causes fall-down with difficulty.

### MEANS FOR SOLVING THE PROBLEMS

A tire pair for a motorcycle according to the present invention includes a front tire and a rear tire. A difference (F15 - R15) between a camber thrust index F15 of the front tire and a camber thrust index R15 of the rear tire at a camber angle of 15° is equal to or greater than -0.038 and is equal to or smaller than 0.038. A difference (F30 - R30) between a camber thrust index F30 of the front tire and a camber thrust index R30 of the rear tire at a camber angle of 30° is equal to or greater than 0.038 and is equal to or smaller than 0.114. The camber thrust index F30 of the front tire at the camber angle of 30° is equal to or greater than 0.570. A difference (F45 - R45) between a camber thrust index F45 of the front tire and a camber thrust index R45 of the rear tire at a camber angle of 45° is equal to or greater than 0.076 and is equal to or smaller than 0.228.

It is preferable that a ratio (F45 / F30) of the camber thrust index F45 to the camber thrust index F30 should be equal to or higher than 1.4.

It is preferable that a cord of the front tire should have a tensile strength which is equal to or greater than 1000 MPa, a complex elastic modulus E^{*} (120°C) which is equal to or higher than 580000 N/cm² and a loss tangent tanδ (120°C) which is equal to or smaller than 0.075.

### EFFECT OF THE INVENTION

The tire pair is excellent in a steering responsiveness in a transition from straight running to cornering. The tire pair is also excellent in a cornering stability. In the tire pair, furthermore, fall-down is caused with difficulty in the cornering in a state in which a camber angle is great.

### BRIEF DESCRIPTION OF THE DRAWINGS

Fig. 1 is a perspective view showing a motorcycle to which a tire pair according to an embodiment of the present invention is attached.
Fig. 2 is an enlarged sectional view showing a part of a front tire in Fig. 1.
Fig. 3 is an enlarged sectional view showing a part of a rear tire in Fig. 1.

### EXPLANATION OF DESIGNATIONS

- 2: tire pair
- 4: motorcycle
- 6: front tire
- 8: rear tire
- 10, 46: tread
- 14, 50: sidewall
- 16, 52: clinch portion
- 18, 54: bead
- 20, 56: carcass
- 22, 58: belt
- 32, 68: first carcass ply
- 34, 70: second carcass ply
- 44, 80: belt ply

### BEST MODE FOR CARRYING OUT THE INVENTION

The present invention will be described below in detail based on a preferred embodiment with reference to the drawings.

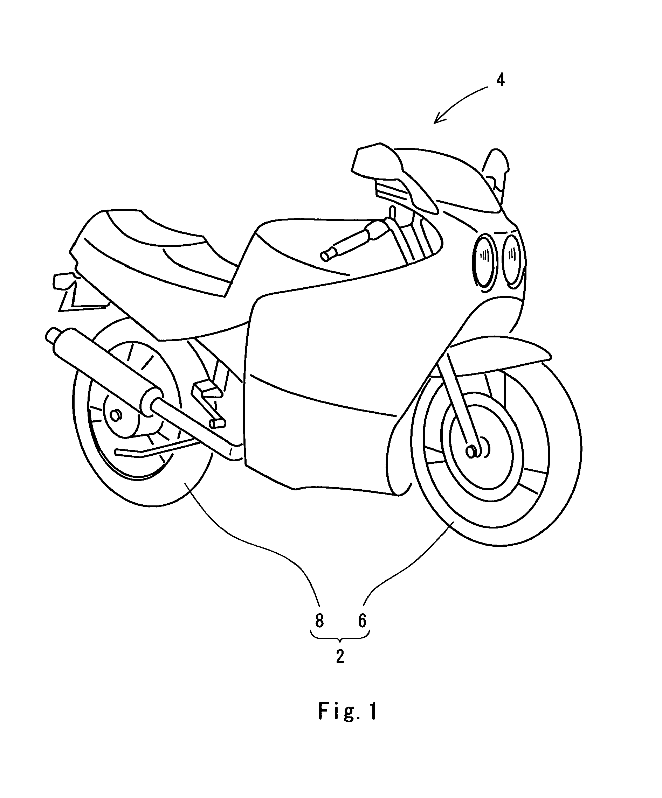

Fig. 1 is a perspective view showing a motorcycle 4 to which a tire pair 2 according to an embodiment of the present invention is attached. The tire pair 2 is formed by a front tire 6 and a rear tire 8.

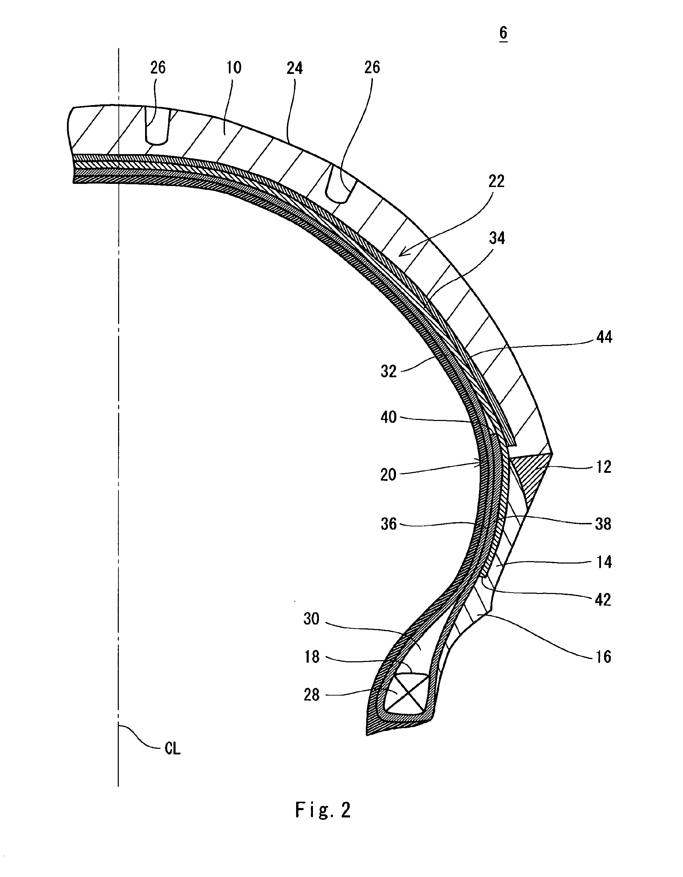

Fig. 2 is an enlarged sectional view showing a part of the front tire 6 in Fig. 1. In Fig. 2, a vertical direction indicates a radial direction of the tire 6, a transverse direction indicates an axial direction of the tire 6, and a perpendicular direction to a paper indicates a circumferential direction of the tire 6. The tire 6 takes an almost symmetrical shape around an equator CL. The tire 6 includes a tread 10, a wing 12, a sidewall 14, a clinch portion 16, a bead 18, a carcass 20 and a belt 22. The tire 6 is a pneumatic tire of a tubeless type.

The tread 10 is constituted by a crosslinked rubber and takes an outward convex shape in the radial direction. The tread 10 forms a tread surface 24 to come in contact with a road surface. The tread 10 has a groove 26. The groove 26 is concaved from the tread surface 24. By the groove 26, a tread pattern is formed. There is preferred a tread pattern which is extended along the equator CL and has a small number of grooves 26. In the tread 10 employing the pattern, a sufficient rigidity is achieved also in the equator CL. By the pattern, a great camber thrust is achieved. The tread 10 does not need to have the groove 26.

The sidewall 14 is extended almost inward in the radial direction from an end of the tread 10. The sidewall 14 is constituted by a crosslinked rubber. The sidewall 14 absorbs a shock from the road surface by a flexure. Furthermore, the sidewall 14 prevents an external damage of the carcass 20.

The bead 18 is positioned on an inside in the radial direction with respect to the sidewall 14. The bead 18 includes a core 28 and an apex 30 extended outward in the radial direction from the core 28. The core 28 is ring-shaped. The core 28 includes a plurality of non-extensible wires (typically, wires formed of steel). The apex 30 is tapered outward in the radial direction. The apex 30 is constituted by a crosslinked rubber having a high hardness. The hardness of the apex 30 is preferably equal to or higher than 87 and is more preferably equal to or higher than 90. By the apex 30 having a high hardness, it is possible to achieve a great camber thrust. The hardness is measured by a durometer of a type A in accordance with "JIS K 6253". In the measurement, a temperature is set to be 23°C.

The carcass 20 is laid between the beads 18 on both sides and is provided along an inside of the tread 10 and the sidewall 14. The carcass 20 is formed by a first carcass ply 32 and a second carcass ply 34. The first carcass ply 32 is wound up from an inside toward an outside in the axial direction around the core 28. The first carcass ply 32 can be distinguished into a main portion 36 and a wind-up portion 38 with the core 28 set to be a boundary. An upper end 40 of the wind-up portion 38 reaches a portion provided under the belt 22. The carcass 20 has an ultrahigh turn-up structure. By the carcass 20, it is possible to achieve a great camber thrust. The second carcass ply 34 is laminated on an outside of the first carcass ply 32. The second carcass ply 34 is not wound around the core 28. A lower end 42 of the second carcass ply 34 is positioned under the sidewall 14.

The first carcass ply 32 and the second carcass ply 34 are constituted by a cord and a topping rubber, which is not shown. An absolute value of an angle formed by the cord in the circumferential direction is 70° to 90°. The carcass 20 has a radial structure. The cord is constituted by an organic fiber. Examples of a preferable organic fiber include an aramid fiber, a polyethylene naphthalate fiber, a rayon fiber, a polyester fiber and a nylon fiber. In order to obtain a great camber thrust and cornering force, the aramid fiber and the polyethylene naphthalate fiber are preferable and the aramid fiber is particularly preferable.

In respect of a lightness in a weight of the front tire 6, a tensile strength of a carcass cord is preferably equal to or higher than 1000 MPa and is more preferably equal to or higher than 1400 MPa. It is preferable that the tensile strength should be equal to or lower than 1800 MPa. The tensile strength is measured in accordance with "JIS K 6251".

In respect of the camber thrust and the cornering force, a complex elastic modulus E^{*} of the carcass cord is preferably equal to or higher than 580000 N/cm² and is more preferably equal to or higher than 3000000 N/cm². It is preferable that the complex elastic modulus E^{*} should be equal to or lower than 4000000 N/cm².

In respect of the camber thrust and the cornering force, a loss tangent tanδ of the carcass cord is preferably equal to or smaller than 0.075 and is more preferably equal to or smaller than 0.070. It is preferable that the loss tangent tanδ should be equal to or greater than 0.05.

The complex elastic modulus E^{*} and the loss tangent tanδ are measured by a viscoelastic spectrometer ("VA-200" manufactured by SHIMADZU CORPORATION) on the following conditions in accordance with the rules of "JIS-K 6394".
Initial load : 9.8N
Amplitude : 0.05%
Frequency : 10Hz
Deforming mode : tension
Measuring temperature : 120°C

The belt 22 is positioned on an outside in the radial direction of the carcass 20. The belt 22 is laminated on the carcass 20. The belt 22 reinforces the carcass 20. The belt 22 is formed by a belt ply 44. The belt ply 44 is obtained by spirally winding a ribbon which is formed by at least one cord extended in a longitudinal direction and a topping rubber. The cord is extended substantially in the circumferential direction. An angle formed by the cord in the circumferential direction is equal to or smaller than 5° and is particularly equal to or smaller than 2°. The cord has a so-called jointless structure. In order to wind the ribbon without causing a step, it is preferable that two cords should be provided in the ribbon. By the belt 22 having no step, it is possible to achieve a proper camber thrust.

It is preferable that a hybrid cord should be used for the belt 22. In a typical hybrid cord, a nylon fiber and an aramid fiber are used together. In the hybrid cord, an elongation in a low load is comparatively great. Therefore, it is possible to obtain a uniform contact pressure distribution. In the hybrid cord, an elongation in a high load is comparatively small. Therefore, it is possible to obtain a great shearing stress. By the uniform contact pressure distribution and the great shearing stress, it is possible to achieve a great camber thrust.

The belt 22 may include a cut ply together with a ply having the jointless structure. The belt 22 may be formed by only the cut ply.

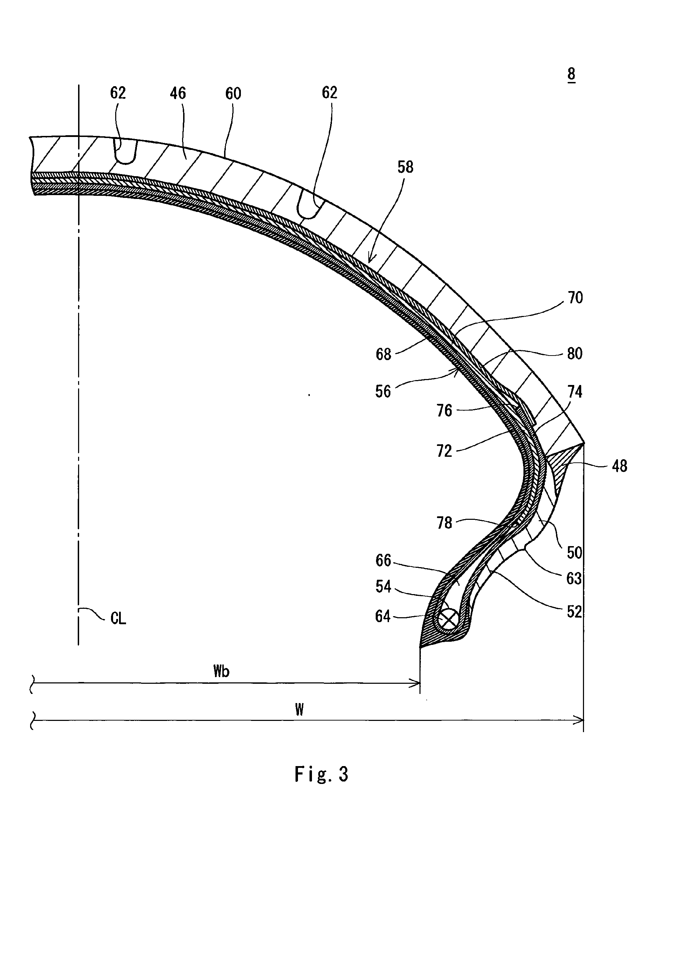

Fig. 3 is an enlarged sectional view showing a part of the rear tire 8 in Fig. 1. In Fig. 3, a vertical direction indicates a radial direction of the tire 8, a transverse direction indicates an axial direction of the tire 8, and a perpendicular direction to the paper indicates a circumferential direction of the tire 8. The tire 8 takes an almost symmetrical shape around the equator CL. The tire 8 includes a tread 46, a wing 48, a sidewall 50, a clinch portion 52, a bead 54, a carcass 56 and a belt 58. The tire 8 is a pneumatic tire of a tubeless type.

The tread 46 is constituted by a crosslinked rubber and takes an outward convex shape in the radial direction. The tread 46 forms a tread surface 60 to come in contact with a road surface. The tread 46 has a groove 62. The groove 62 is concaved from the tread surface 60. By the groove 62, a tread pattern is formed. There is preferred a pattern in which the groove 62 is not distributed unevenly in the axial direction. By the pattern, a difference in a rigidity between the vicinity of the equator CL and a shoulder portion is relieved. By the tread 46 having a small difference in the rigidity, it is possible to achieve a proper difference in a camber thrust index. The tread 46 does not need to have the groove 62.

The sidewall 50 is extended almost inward in the radial direction from an end of the tread 46. The sidewall 50 is constituted by a crosslinked rubber. The sidewall 50 absorbs a shock from the road surface by a flexure. Furthermore, the sidewall 50 prevents an external damage of the carcass 56. As is apparent from Fig. 3, the sidewall 50 takes an outward convex shape in the axial direction. The sidewall 50 contributes to a uniform contact pressure distribution in cornering. By the uniform contact pressure distribution, it is possible to achieve a proper difference in the camber thrust index.

The sidewall 50 is thinner than a sidewall of a general rear tire. By employing the thin sidewall 50, a portion of the carcass 56 on which the sidewall 50 is laminated can be positioned close to an outside in the axial direction. The structure contributes to a uniform contact pressure distribution in the cornering. By the uniform contact pressure distribution, it is possible to achieve the proper difference in the camber thrust index.

As is apparent from Fig. 3, a surface of the clinch portion 52 is smoothly linked to a surface of the sidewall 50. Assuming that a clinch line 63 is not provided, the surface of the sidewall 50 comes in contact with the surface of the clinch portion 52. The shape contributes to the uniform contact pressure distribution in the cornering. By the uniform contact pressure distribution, it is possible to achieve the proper difference in the camber thrust index.

The bead 54 is positioned on an inside in the radial direction with respect to the sidewall 50. The bead 54 includes a core 64 and an apex 66 extended outward in the radial direction from the core 64. The core 64 is ring-shaped. It is preferable that the core 64 should include a cable obtained by spirally winding another wire around a core wire. The core 64 is referred to as a "cable bead". The cable bead contributes to the uniform contact pressure distribution in the cornering. By the uniform contact pressure distribution, it is possible to achieve the proper difference in the camber thrust index. The apex 66 is tapered outward in the radial direction. The apex 66 is constituted by a crosslinked rubber having a high hardness.

In Fig. 3, a double arrow W indicates a maximum width of the tire 8 and a double arrow Wb indicates a distance in the axial direction from one of the beads 54 to the other bead 54. It is preferable that a ratio of the width Wb to the maximum width W should be equal to or lower than 70%. In the tire 8 having a low ratio, it is possible to obtain a uniform contact pressure distribution in the cornering. By the uniform contact pressure distribution, it is possible to achieve the proper difference in the camber thrust index. From this viewpoint, it is more preferable that the ratio should be equal to or lower than 68%. It is preferable that the ratio should be equal to or higher than 66%.

The carcass 56 is laid between the beads 54 on both sides and is provided along an inside of the tread 46 and the sidewall 50. The carcass 56 is formed by a first carcass ply 68 and a second carcass ply 70. The first carcass ply 68 is wound up from an inside toward an outside in the axial direction around the core 64. The first carcass ply 68 can be distinguished into a main portion 72 and a wind-up portion 74 with the core 64 set to be a boundary. An upper end 76 of the wind-up portion 74 reaches a portion provided under the belt 58. The carcass 56 has an ultrahigh turn-up structure. The second carcass ply 70 is not wound around the core 64. A lower end 78 of the second carcass ply 70 is interposed between the main portion 72 and the wind-up portion 74. In other words, the lower end 78 is not exposed to a surface of the carcass 56. The carcass 56 contributes to the uniform contact pressure distribution in the cornering. By the uniform contact pressure distribution, it is possible to achieve the proper difference in the camber thrust index.

The first carcass ply 68 and the second carcass ply 70 are constituted by a cord and a topping rubber, which is not shown. An absolute value of an angle formed by the cord in the circumferential direction is 70° to 90°. The carcass 56 has a radial structure. The cord is usually constituted by an organic fiber. Examples of a preferable organic fiber include a nylon fiber, an aramid fiber, a polyethylene naphthalate fiber, a rayon fiber and a polyester fiber.

The belt 58 is positioned on an outside in the radial direction of the carcass 56. The belt 58 is laminated on the carcass 56. The belt 58 reinforces the carcass 56. The belt 58 is formed by a belt ply 80. The belt ply 80 is obtained by spirally winding a ribbon which is formed by at least one cord extended in a longitudinal direction and a topping rubber. The cord is extended substantially in the circumferential direction. An angle formed by the cord in the circumferential direction is equal to or smaller than 5° and is particularly equal to or smaller than 2°. The cord has a so-called jointless structure. In order to wind the ribbon without causing a step, it is preferable that two or three cords should be provided in the ribbon. By the belt 58 having no step, it is possible to achieve the proper difference in the camber thrust index. Examples of a preferable material of the cord include an aramid fiber, a carbon fiber and steel. It is also possible to use a hybrid cord. The belt 58 may include a cut ply together with a ply having the jointless structure. The belt 58 may be formed by only the cut ply.

In the motorcycle 4, a steering responsiveness in a transition from straight running to cornering is important. According to knowledge given to the present inventor, the steering responsiveness depends on a difference (F15 - R15) between a camber thrust index F15 of the front tire 6 and a camber thrust index R15 of the rear tire 8. The camber thrust indices F15 and R15 are measured at a camber angle of 15°. A camber thrust Cf15(N) of the front tire 6 is divided by a load (N) so that the camber thrust index F15 is obtained. A camber thrust Cr15(N) of the rear tire 8 is divided by the load (N) so that the camber thrust index R15 is obtained. It is preferable that the difference (F15 - R15) should be equal to or smaller than 0.038. In the tire pair 4 in which the difference (F15 - R15) is equal to or smaller than 0.038, a delay of a response of the front tire 6 is not caused. From this viewpoint, the difference (F15 - R15) is more preferably equal to or smaller than 0.023 and is particularly preferably equal to or smaller than 0.012. In respect of a suppression in an excessively quick response of the front tire 6, it is preferable that the difference (F15 - R15) should be equal to or greater than -0.038.

In the tire pair 4, it is possible to achieve an excellent steering responsiveness based on the difference (F15 - R15). Accordingly, it is not necessary to set the cornering force of the front tire 6 to be excessively great. In the tire pair 4, the steering responsiveness is compatible with a disturbance absorbing property.

In respect of the steering responsiveness, within a whole range in which the camber angle is equal to or greater than 15° and is equal to or smaller than 20°, the difference between the camber thrust index of the front tire 6 and the camber thrust index of the rear tire 8 is preferably equal to or greater than -0.038 and equal to or smaller than 0.038, is further preferably equal to or greater than -0.038 and equal to or smaller than 0.023, and is particularly preferably equal to or greater than -0.038 and equal to or smaller than 0.012.

It is preferable that the camber thrust index F15 should be equal to or greater than 0.269 and should be equal to or smaller than 0.346. It is preferable that the camber thrust index R15 should be equal to or greater than 0.228 and should be equal to or smaller than 0.308.

In the present invention, the camber thrust is measured by a flat belt testing machine manufactured by MTS Co., Ltd. The conditions of the measurement are as follows.

| | |
|---|---|
| Belt surface : | Safety walk |
| Temperature : | 25°C ± 3°C |
| Speed : | 30 km/h |

Air pressure : Value specified depending on vehicle In the measurement, a load applied to a front tire or a rear tire when a rider having a body weight of 65 kg rides in a vehicle is given to the tire.

In the motorcycle 4, a handling stability in the cornering is important. According to the knowledge given to the present inventor, the handling stability depends on a difference (F30 - R30) between a camber thrust index F30 of the front tire 6 and a camber thrust index R30 of the rear tire 8. The camber thrust indices F30 and R30 are measured at a camber angle of 30°. A camber thrust Cf30(N) of the front tire 6 is divided by a load (N) so that the camber thrust index F30 is obtained. A camber thrust Cr30(N) of the rear tire 8 is divided by the load (N) so that the camber thrust index R30 is obtained. It is preferable that the difference (F30 - R30) should be equal to or greater than 0.038 and should be equal to or smaller than 0.114. In the tire pair 4 in which the difference (F30 - R30) is equal to or greater than 0.038, a delay of a response of the front tire 6 is not caused. From this viewpoint, the difference (F30 - R30) is more preferably equal to or greater than 0.054 and is particularly preferably equal to or greater than 0.069. In the tire pair 4 in which the difference (F30 - R30) is equal to or smaller than 0.114, a delay of a response of the rear tire 8 is not caused. From this viewpoint, the difference (F30 - R30) is more preferably equal to or smaller than 0.100 and is particularly preferably equal to or smaller than 0.085.

According to the knowledge given to the present inventor, the handling stability also depends on the camber thrust index F30 of the front tire 6. The camber thrust index F30 is set to be equal to or greater than 0.570 so that the delay of the response of the front tire 6 is not caused. From this viewpoint, the camber thrust index F30 is more preferably equal to or greater than 0.600 and is particularly preferably equal to or greater than 0.615. It is preferable that the camber thrust index F30 should be equal to or smaller than 0.731.

In the motorcycle 4, it is important that fall-down of the front tire 6 is not caused at a great camber angle. According to the knowledge given to the present inventor, a suppression in the fall-down depends on a difference (F45 - R45) between a camber thrust index F45 of the front tire 6 and a camber thrust index R45 of the rear tire 8. The camber thrust indices F45 and R45 are measured at a camber angle of 45°. A camber thrust Cf45 (N) of the front tire 6 is divided by a load (N) so that the camber thrust index F45 is obtained. A camber thrust Cr45(N) of the rear tire 8 is divided by the load (N) so that the camber thrust index R45 is obtained. In respect of the suppression in the fall-down, the difference (F45 - R45) is preferably equal to or greater than 0.076, is more preferably equal to or greater than 0.108 and is particularly preferably equal to or greater than 0.138. If the difference (F45 - R45) is excessively great, there is a possibility that reverse steering might be required during the cornering. The reverse steering gives a noncomfortableness to a rider. In respect of a prevention of the noncomfortableness, it is preferable that the difference (F45 - R45) should be equal to or smaller than 0.228.

In the tire pair 4, the fall-down is suppressed owing to the difference (F45 - R45). Accordingly, it is not necessary to set a camber torque of the front tire 6 to be excessively great. In the tire, an involution can be suppressed.

In respect of the suppression in the fall-down, within a whole range in which the camber angle is equal to or greater than 40° and is equal to or smaller than 45°, it is preferable to achieve the difference (F45 - R45) which is equal to or greater than 0.076 and is equal to or smaller than 0.228, is further preferable to achieve the difference (F45 - R45) which is equal to or greater than 0.108 and is equal to or smaller than 0.228, and is particularly preferable to achieve the difference (F45 - R45) which is equal to or greater than 0.138 and is equal to or smaller than 0.228.

It is preferable that the camber thrust index F45 should be equal to or greater than 0.846 and equal to or smaller than 1. 000. It is preferable that the camber thrust index R45 should be equal to or greater than 0.731 and equal to or smaller than 0.923.

It is preferable that a ratio (F45 / F30) of the camber thrust index F45 to the camber thrust index F30 should be equal to or higher than 1.4. The front tire 6 contributes to the suppression in the fall-down. From this viewpoint, it is more preferable that the ratio (F45 / F30) should be equal to or higher than 1.5. It is preferable that the ratio (F45 / F30) should be equal to or smaller than 1.8.

In the present invention, a dimension and an angle are measured in a state in which a tire is incorporated in a normal rim and is filled with air to obtain a normal internal pressure. During the measurement, a load is not applied to the tire. In this specification, the normal rim implies a rim determined in rules on which the tire depends. A "standard rim" in the JATMA rules, a "Design Rim" in the TRA rules and a "Measuring Rim" in the ETRTO rules are included in the normal rim. In this specification, the normal internal pressure implies an internal pressure determined in the rules on which the tire depends. A "maximum air pressure" in the JATMA rules, a "maximum value" described in "TIRE LOAD LIMITS AT VARIOUS COLD INFLATION PRESSURES" in the TRA rules and an "INFLATION PRESSURE" in the ETRTO rules are included in the normal internal pressure.

### EXAMPLES

Although the effect of the present invention will be apparent from examples, the present invention should not be construed to be restrictive based on the description of the examples.

### [Example 1]

There was obtained a tire pair including a front tire having the structure shown in Fig. 2 and a rear tire having the structure shown in Fig. 3. The front tire has a size of "120/70R17". The rear tire has a size of "190/50R17". A carcass cord of the front tire is formed by an aramid fiber. The fiber has a fineness of 800 dtex. A hybrid cord having a jointless structure is used for a belt of the front tire. A belt cord has a fineness of 1670 dtex. A carcass cord of the rear tire is formed by an aramid fiber. The fiber has a fineness of 800 dtex. A cord having the jointless structure is used for a belt of the rear tire. A material of the belt cord is an aramid fiber which has a fineness of 1670 dtex. The tire pair has a camber thrust shown in the following Table 1. Measuring conditions of the camber thrust are as follows.

| | |
|---|---|
| Air pressure of front tire : | 250 kPa |
| Load of front tire : | 1.3 kN |
| Air pressure of rear tire : | 290 kPa |
| Load of rear tire : | 1.3 kN |

In the tire pair, a difference (F15 - R15) is zero, a difference (F30 - R30) is 0.076 and a difference (F45 - R45) is 0.153.

### [Examples 2 to 4 and Comparative Examples 1 and 2]

A tire pair according to each of examples 2 to 4 and comparative examples 1 and 2 was obtained in the same manner as in the example 1 except that the difference (F15 - R15) is set as shown in the following Table 1.

### [Examples 5 to 8 and Comparative Examples 3 and 4]

A tire pair according to each of examples 5 to 8 and comparative examples 3 and 4 was obtained in the same manner as in the example 1 except that the difference (F30 - R30) is set as shown in the following Table 2.

### [Examples 9 to 11 and Comparative Examples 5 and 6]

A tire pair according to each of examples 9 to 11 and comparative examples 5 and 6 was obtained in the same manner as in the example 1 except that the difference (F45 - R45) is set as shown in the following Table 3.

### [Running Test]

A front tire was incorporated into a rim of "MT17 x 3.50". The front tire was filled with air to have an internal pressure of 250 kPa. A rear tire was incorporated into a rim of "MT17 x 6.00". The rear tire was filled with air to have an internal pressure of 290 kPa. The front tire and the rear tire were attached to a motorcycle having a displacement of 1000 cm³. The motorcycle was caused to run over a racing circuit course, and a rider was caused to give a rating to a handling property. The result is shown in the following Tables 1 to 3. The rating was set into five stages of "1" to "5". "5" is the most preferable.

**Table 1 Result of Evaluation**

| | Compa. example 1 | Example 2 | Example 1 | Example 3 | Example 4 | Compa. example 2 |
|---|---|---|---|---|---|---|
| Cf15 (N) | 320 | 350 | 400 | 430 | 450 | 450 |
| Cr15 (N) | 400 | 400 | 400 | 400 | 400 | 370 |
| (F15-R15) | -0.062 | -0.038 | 0 | 0.023 | 0.038 | 0.062 |
| Cf30 (N) | 800 | 800 | 800 | 800 | 800 | 800 |
| Cr30 (N) | 700 | 700 | 700 | 700 | 700 | 700 |
| (F30-R30) | 0.076 | 0.076 | 0.076 | 0.076 | 0.076 | 0.076 |
| Cf45 (N) | 1200 | 1200 | 1200 | 1200 | 1200 | 1200 |
| Cr45 (N) | 1000 | 1000 | 1000 | 1000 | 1000 | 1000 |
| (F45-R45) | 0.154 | 0.154 | 0.154 | 0.154 | 0.154 | 0.154 |
| Steering responsiveness | 2 | 3 | 5 | 4 | 3 | 2 |
| Cornering stability | 5 | 5 | 5 | 5 | 5 | 5 |
| Suppression in fall-down | 5 | 5 | 5 | 5 | 5 | 5 |
| Suppression in reverse steering | 5 | 5 | 5 | 5 | 5 | 5 |

**Table 2 Result of Evaluation**

| | Compa. example 3 | Example 5 | Example 6 | Example 1 | Example 7 | Example 8 | Compa. example 4 |
|---|---|---|---|---|---|---|---|
| Cf15 (N) | 400 | 400 | 400 | 400 | 400 | 400 | 400 |
| Cr15 (N) | 400 | 400 | 400 | 400 | 400 | 400 | 400 |
| (F15-R15) | 0 | 0 | 0 | 0 | 0 | 0 | 0 |
| Cf30 (N) | 700 | 750 | 770 | 800 | 830 | 850 | 850 |
| Cr30 (N) | 700 | 700 | 700 | 700 | 700 | 700 | 650 |
| (F30-R30) | 0 | 0.038 | 0.054 | 0.076 | 0.100 | 0.114 | 0.154 |
| Cf45 (N) | 1200 | 1200 | 1200 | 1200 | 1200 | 1200 | 1200 |
| Cr45 (N) | 1000 | 1000 | 1000 | 1000 | 1000 | 1000 | 1000 |
| (F45-R45) | 0.154 | 0.154 | 0.154 | 0.154 | 0.154 | 0.154 | 0.154 |
| Steering responsiveness | 5 | 5 | 5 | 5 | 5 | 5 | 5 |
| Cornering stability | 2 | 3 | 4 | 5 | 4 | 3 | 2 |
| Suppression in fall-down | 5 | 5 | 5 | 5 | 5 | 5 | 5 |
| Suppression in reverse steering | 5 | 5 | 5 | 5 | 5 | 5 | 5 |

**Table 3 Result of Evaluation**

| | Compa. example 5 | Example 9 | Example 10 | Example 1 | Example 11 | Compa. example 6 |
|---|---|---|---|---|---|---|
| Cf15 (N) | 400 | 400 | 400 | 400 | 400 | 400 |
| Cr15 (N) | 400 | 400 | 400 | 400 | 400 | 400 |
| (F15-R15) | 0 | 0 | 0 | 0 | 0 | 0 |
| Cf30 (N) | 800 | 800 | 800 | 800 | 800 | 800 |
| Cr30 (N) | 700 | 700 | 700 | 700 | 700 | 700 |
| (F30-R30) | 0.076 | 0.076 | 0.076 | 0.076 | 0.076 | 0.076 |
| Cf45 (N) | 1100 | 1100 | 1140 | 1200 | 1200 | 1200 |
| Cr45 (N) | 1100 | 1000 | 1000 | 1000 | 900 | 800 |
| (F45-R45) | 0 | 0.076 | 0.108 | 0.154 | 0.228 | 0.308 |
| Steering responsiveness | 5 | 5 | 5 | 5 | 5 | 5 |
| Cornering stability | 5 | 5 | 5 | 5 | 5 | 5 |
| Suppression in fall-down | 1 | 3 | 4 | 5 | 5 | 5 |
| Suppression in reverse steering | 5 | 5 | 5 | 5 | 3 | 1 |

As shown in the Tables 1 to 3, the tire pair according to each of the examples is excellent in a performance in cornering. From the result of the evaluation, the advantages of the present invention are apparent.

### INDUSTRIAL APPLICABILITY

A tire pair according to the present invention can be attached to various motorcycles.

## Claims

1. A tire pair for a motorcycle comprising a front tire and a rear tire, wherein
a difference (F15 - R15) between a camber thrust index F15 of the front tire and a camber thrust index R15 of the rear tire at a camber angle of 15° is equal to or greater than -0.038 and equal to or smaller than 0.038,
a difference (F30 - R30) between a camber thrust index F30 of the front tire and a camber thrust index R30 of the rear tire at a camber angle of 30° is equal to or greater than 0.038 and equal to or smaller than 0.114,
the camber thrust index F30 at the camber angle of 30° is equal to or greater than 0.570, and
a difference (F45 - R45) between a camber thrust index F45 of the front tire and a camber thrust index R45 of the rear tire at a camber angle of 45° is equal to or greater than 0.076 and equal to or smaller than 0.228.

2. The tire pair according to claim 1, wherein a ratio (F45 / F30) of the camber thrust index F45 to the camber thrust index F30 is equal to or higher than 1.4.

3. The tire pair according to claim 1, wherein the front tire includes a carcass having a cord, and the cord has a tensile strength which is equal to or greater than 1000 MPa, a complex elastic modulus E^{*} (120°C) which is equal to or higher than 580000 N/cm² and a loss tangent tanδ (120°C) which is equal to or smaller than 0.075.
